# EUROPEAN PATENT SPECIFICATION

(11) **EP 3 670 268 B1**
(45) Date of publication and mention of the grant of the patent: **21.04.2021**
(21) Application number: 18214528.4
(22) Date of filing: 20.12.2018
(51) Int. Cl.: B60R 7/04

(54) **VEHICLE COMPRISING VEHICLE SEAT AND LUGGAGE-SPACE**
FAHRZEUG MIT FAHRZEUGSITZ UND GEPÄCKRAUM
VÉHICULE COMPRENANT UN SIÈGE DE VÉHICULE ET UN COMPARTIMENT À BAGAGES

(43) Date of publication of application: 24.06.2020
(73) Proprietor: AUDI AG, 85045 Ingolstadt (DE)
(72) Inventor: Redeker, Immo, 85051 Ingolstadt (DE); Hélot, Jacques, 85051 Ingolstadt (DE)

(56) References cited:
- EP-A2- 2 759 447
- DE-A1- 19 947 177
- DE-A1-102007 061 222
- DE-A1-102015 118 481
- DE-A1-102016 112 919
- DE-U1-202018 104 425
- FR-A1- 2 909 943
- JP-A- H1 178 701
- US-B1- 7 318 616

## Description

The invention is concerned with a vehicle comprising a vehicle seat and a luggage-space.

Usually, a person travelling by a vehicle carries his luggage-case inside the vehicle and may place it in the foot rest place in front of the vehicle seat or in an inter seat space, which is a space between a rear vehicle seat and a front vehicle seat. This can however hinder the person to place his foot properly or comfortably, since the foot rest space or the inter space has been occupied by the luggage-case. In the case of the foot rest space corresponding to a driver seat, the person would have problems to access the brake pedals located in the foot rest space, which could be dangerous. Furthermore, in cases where a neighboring vehicle seat is empty, then the person may place his luggage-case on the neighboring vehicle seat. However, this can be dangerous in cases where a jerk event occurs, for example, when a sudden braking of the vehicle takes place or a sudden acceleration of the vehicle occurs, in which case the luggage-case can fly in an interior vehicle room as a projectile and can cause damage to further vehicle components or to itself.

Document DE 10 2007 061 222 A1 discloses a seat having a returning device attached below the seat. The returning device has a flexible tension belt for attaching loading goods at the seat, wherein the tension belt extends diagonally in a seat direction. The returning device includes a saucer type support part attached at the seat, wherein the loading goods are formally clamped between the support part and the tension belt. The support part has a base and an opening, wherein the loading goods are pushed against the base using the tension belt. However, a usage of such a tension belt complex and time consuming.

Document DE 10 2015 118 481 A1 discloses a folding seat arrangement for a motor vehicle. The folding seat arrangement comprises a back rest, a seat base and a storage compartment. The seat base includes first and second portions that are independently pivotable between a raised position and a seated position. The integrated storage compartment is defined between the two sections of the seat base. However, such a storage compartment is always present beneath the seat and cannot be removed when desired.

Document DE 199 47 177 A1 discloses a motor vehicle, having a vehicle seat below which a guided storage device is provided, which for loading can be moved at least partially outside the vertical projection surface of the seat part. The storage device is arranged laterally outwards transversely in the direction of travel and can be moved underneath the vehicle seat.

Document EP 2 759 447 A2 , that corresponds to the preamble of claim 1, discloses a passenger seat of an aircraft, which is suitable for interacting with a baggage item as a transport means such that space below the passenger seat can be optimally utilized.

Document JP H1178701 A discloses a storage device for motor vehicles, having a storage space and a mounting unit attaching the storage unit to a space below a seat cushion of an automobile.

Document DE 20 2018 104 425 U1 discloses a seating assembly of a vehicle, comprising a support structure defining a container, a subassembly disposed over the support structure and including a pad, the subassembly defining a cavity in the pad, the cavity having a larger cross sectional areas than the container, and a seat insert disposed within the cavity and above the container.

Document US 7,318,616 B1 discloses a vehicle filing cabinet that is disposed between the floor of a vehicle's cab and seat for supporting the seat and for the secured storage and easy retrieval of files, other paperwork, objects and utensils.

It is an object of the present invention to provide a vehicle with an opportunity for transporting a luggage without limiting a space for legs, while maintaining security and providing a fixed position for the luggage.

The object is accomplished by the subject matter of claim 1.

Advantageous developments with convenient and non-trivial further embodiments of the invention are specified in the dependent claims.

The invention provides a vehicle comprising a vehicle seat, such that the vehicle seat can be connected or integrated to a vehicle floor by means of a seat frame. The seat frame may comprise legs structures analogous to the legs of a stool or a chair, such that a lower side of the vehicle seat and the vehicle floor surrounded by the seat frame enclose a volume or space which is referred to as a luggage-space. Hence, the vehicle comprises the luggage-space between the lower side of the vehicle seat and the vehicle floor, wherein the luggage-space is designed to receive a luggage-case. This is of advantage, because this enables the luggage-case to be placed in the luggage-space beneath the vehicle seat. This ensures that a foot resting space corresponding to the vehicle seat is free enabling the user to place his feet in the foot resting space. Furthermore, a free foot resting space is necessary for a user, who can be the driver of the vehicle, to be able to use brake pedals in order to control or manoeuver the vehicle while driving manually. Furthermore, by placing the luggage-case in the luggage-space, an inter seat space can be held free, so that other passengers of the vehicle can place their feet in the inter seat space and be seated in a comfortable manner. However, it necessary that the luggage-case is positioned in an appropriate manner in the luggage-space and is in a fixed state, so that the luggage-case does not move or fly out of the luggage-space during a jerk event which can occur in the case of the driving of the vehicle, for example, when a sudden braking of the vehicle takes place or a sudden acceleration of the vehicle occurs.

According to the invention, the vehicle comprises at least one primary positioning element in the luggage-space which is designed to position the luggage-case or fixate the position of the luggage-case in the luggage space. Furthermore, the luggage-case comprises at least one secondary positioning element and at least one locking element, wherein the at least one secondary positioning element is designed to pair with a respective one of the at least one primary positioning element. In other words, the at least one primary positioning element in the luggage-space and the at least one secondary positioning element of the luggage-case ensure an appropriate positioning of the luggage-case in the luggage-space. For example, the at least one primary positioning element and the at least one secondary positioning element may be a fin and a groove respectively, such that the fin fits or pairs inside the groove. This is of advantage, because this enables an appropriate positioning of the luggage-case in the luggage-space beneath the vehicle seat. Furthermore, legs structures of the seat frame ensure that the luggage-case is in fixed state with respect to the transverse direction or radial direction. For example, in case of the driving of the vehicle along a curved path, wherein centrifugal forces may tend to push the luggage-case out of the luggage-space in along a radially outward direction.

Furthermore, the luggage-case comprises a case-handle which is designed to adjust the at least one locking element between a locking state and a de-locking state. In the locking state, the at least one locking element engages the luggage-case in a fixed state in the luggage-space with respect to a predefined direction. Whereas, in the de-locking state, the at least one locking element disengages the luggage-case, in order that the luggage-case is pulled out of the luggage-space along the predefined direction. In other words, the case-handle of the luggage-case may enable the adjustment of the at least one locking element between the locking state and the de-locking state, for example, by means of a mechanical means which may be known to a person with ordinary skill in the related field of art.

For example, the luggage-case can be pushed in the luggage-space by pushing the luggage-case in the predefined direction, such as in a longitudinal direction or a direction of forward driving, so that the luggage-case may not be able to slip out of the luggage-space during the jerk event. Once inside the luggage-space, the luggage-case can be positioned appropriately by means of the at least one primary positioning element and the respective at least one secondary positioning element, which are designed to pair with each other. Upon the positioning of the luggage-case, the at least one locking can be adjusted to the locking state. For example, the case-handle may comprise a knob and the at least one locking element may comprise a snapping locking element, similar to a locking mechanism which is known the prior art, wherein the snapping locking element can be adjusted to the locking position by pressing the knob. Upon pressing the knob of the case-handle, the snapping locking element may be activated by means of a spring arrangement.

Furthermore, the case-handle enables the pulling the luggage-case out of the luggage-space along the predefined direction, as required by the user, for example, upon the stoppage of the vehicle when the user decides to move out of the vehicle and take the luggage-case with him. The user can then disengage the locking element by means of the case-handle and pull the luggage-case out of the luggage-space along the predefined direction in a comfortable and efficient manner. Hence, a safe placement of the luggage-case in the luggage-space of the vehicle seat is ensured, enabling a usage of the space beneath the vehicle seat. Finally, the at least one locking system enables the safety of the luggage-case as well as other components in the vehicle, especially when of jerk events occur during the driving of the vehicle.

The invention provides that the at least one locking element may comprise a first locking component and the lower side of the vehicle seat may comprise a second locking component, wherein one of the locking components may comprise a locking magnet which is designed to engage the luggage-case by means of a magnetic force to the other one of the locking components. For example, the locking magnet may be in form of a permanent magnet, such that the locking magnet is comprised by the first locking element of the luggage-case. In this case, when the luggage-case is placed and positioned in the luggage-space, then the luggage-case is locked by means of the magnetic force of the locking magnet of the first locking component to the lower side of the vehicle seat. The lower side of the vehicle seat may comprise another permanent magnet with the opposite polarity or may comprise a ferrous material to which the locking magnet of the first locking component is attracted by means of the magnetic force. Hence, the at least one locking element can be adjusted to the locking state in which the luggage-case is engaged in a fix state with respect to the predefined direction.

The invention also comprises embodiments that provide features which afford additional technical advantages.

Furthermore, the locking magnet may be an induction magnet, such that the locking magnet is comprised by the second locking component of the lower side of the vehicle seat. Such that the magnetism of the induction magnet may be controlled by means of an electronic control unit of the vehicle. The electronic control unit may control the magnitude and direction of electricity or current passing through an induction coil which may be looping around the induction magnet, such that strength and polarity of the locking magnet may be controlled by means of the electronic control unit accordingly. Furthermore, the magnetism of the locking magnet may be controlled by the electronic control unit as a function of a driving situation of the vehicle. The driving situation may be a moving situation of the vehicle or a parked situation. In other words, when the luggage-case is placed in the luggage-space at a time when the vehicle is at rest, then the locking of the luggage-case may not be activated by means of the locking magnet, since there may be no danger of the luggage-case being slipping out of the luggage-space, since the vehicle is stationary. However, when the vehicle is started, that is the vehicle starts moving, then the electronic control unit can detect the moving situation of the vehicle and correspondingly send the electricity or current through the induction coil of the induction magnet such that the magnetism of the locking magnet is activated. This ensures a locking of the luggage-case by means of the magnetic force of the induction magnet. Furthermore, the strength of the induction magnet may be controlled by the electronic control unit as a function of the velocity of the vehicle or in case of an anticipation of a jerk event, in which case the strength of the locking magnet may be adjusted to a maximum. This may ensure that the luggage-case is firmly fixed inside the luggage space, even during the jerk event. The jerk event may be dependent on a condition of a road surface, speed bumps on the road, such information can be provided by a Global positioning system (GPS). Furthermore, the jerk events can be anticipated the by vehicle dynamics, for example by the electronic control unit of the vehicle. Hence, the luggage-case may be efficiently engaged in the luggage-space beneath the vehicle seat.

In one embodiment, one of the locking components may comprise a protrusion and the corresponding other locking component may comprise a recession, wherein the protrusion may be designed to pair with the recession. This is of advantage, because this enables the luggage-case to be engaged in the luggage-space, since during the driving of the vehicle which may involve a jerk event, such that shear forces may act on the luggage-case in a direction parallel to the said predefined direction. The shear forces may act along the direction of driving of the vehicle, when the vehicle undergoes a deceleration or upon the application of brakes. The shear forces may act opposite to the direction of driving of the vehicle, when the vehicle undergoes an acceleration. In order to resist the slipping of the luggage-case due to the shear forces, the protrusion and the recession structures can enable the locking of the luggage-case with respect to the predefined direction. This is of advantage, because this enables a simpler and economical means to construct a locking element, such that the luggage-case may be engaged in firmly in the luggage-space.

In one embodiment, one of the at least one primary positioning element and the at least one secondary positioning element may comprise a positioning magnet which may be designed to guide the luggage-case for positioning. In other words, when the luggage-case is pushed inside the luggage-space, then the luggage-case may be assisted or directed to be positioned at a predefined or appropriate position/orientation by means of the magnetic force due to the positioning magnets. The positioning magnets may be comprised by at least one of the primary positioning element and the at least one secondary positioning element. Since the primary positioning element and the secondary positioning element cannot be seen, when the luggage-case is pushed into the luggage-space, hence, the positioning magnets can enable the appropriate positioning of the luggage-case. This enables a simpler and cost-effective means to ensure an efficient positioning of the luggage-case in the luggage-space.

In one embodiment, at least one primary positioning element may comprise a fin and the at least one secondary positioning element may comprise a crater, wherein the fin is designed to pair with the crater. This is of advantage, because this enables a construction of a simple mechanical structure in the form of a fin and a crater, such that the positioning of the luggage-case in the luggage-space can be enabled in an easier and efficient manner. Analogously, the at least one primary positioning element may comprise the crater and the at least one secondary positioning element may comprise the corresponding fin. Furthermore, the fin may comprise a groove.

In one embodiment, the at least one locking element may comprise a hook element which may be designed to engage into the at least one primary position element upon an adjustment of the at least one locking element to the locking state. For example, the hook element can be in form of the snapping locking element, similar to a locking mechanism which is known the prior art, wherein the snapping locking element can be adjusted to the locking position by pressing the knob. This is of advantage, because this can enable a simpler and cost-effective means to ensure an efficient locking of the luggage-case in the luggage-space.

In one embodiment, the at least one of the lower side of the vehicle seat and the vehicle floor may comprise the at least one primary positioning element. This is of advantage, because this may allow a flexibility in the construction and/or integration of the at least one positioning element in the vehicle, such that the at least one positioning element can be integrated to the lower side of the vehicle seat and/or the vehicle floor, in order to enable an efficient positioning of the luggage-case in the luggage-space. It may also allow the vehicle seat to be adjusted backward or forward.

In one embodiment, the luggage-case may be customized according to the shape and size of the luggage-space of the vehicle. In other words, the luggage-space which is formed by the lower side of the vehicle seat and the seat frame, encloses a volume which is the luggage-space, such that the luggage-space may conform the luggage-case. This is of advantage, because this can enable an efficient positioning and locking of the luggage-case and at the same time an efficient usage of the luggage-space can be ensured, since the luggage-case is customized in order to occupy a maximum possible portion of the luggage-space.

In one embodiment, in the fixed state, the case-handle may be positioned at a side of the luggage-case facing the predefined direction. The case-handle may be designed to assist the pulling out of the luggage-case out of the luggage-space after an adjustment of the at least one locking element to the de-locking state. In other words, the case-handle may be placed on the side of the luggage-case which may be facing the predefined direction, for example, in direction of driving. This can enable the user, who is sitting on the corresponding vehicle seat, to easily reach the case-handle in order to disengage or engage the locking element, such that the case-handle can be pulled out or pushed in as per the requirement of the user.

In one embodiment, the case-handle may be adjustable between an engaging position and a disengaging position, in order to adjust the at least one locking element between the locking state and the de-locking state. For example, the case-handle can be pushed down, in order to disengage the locking system, so that the locking element is adjusted to the de-locking state. After which, the luggage-case can be easily pulled out of the luggage-space. This is of advantage, because this enables a simpler construction of the case-handle of the luggage-case, since no additional element such as a knob is needed. Hence, it can enable an efficient and economical construction of the luggage-case.

The inventive vehicle is preferably designed as a motor vehicle, in particular as a passenger vehicle or a truck, or as a bus.

The invention also comprises the combinations of the features of the different embodiments.

In the following an exemplary implementation of the invention is described. The figures show:
- Fig. 1: a schematic illustration of an embodiment of a vehicle with a vehicle seat, a luggage-space and a luggage-case;
- Fig. 2: a schematic illustration of an embodiment of the luggage-case;
- Fig. 3: a schematic illustration of an embodiment of the luggage-case;
- Fig. 4: a schematic illustration of an embodiment of a primary position element, a secondary positioning element and a locking element;
- Fig. 5: a schematic illustration of an embodiment of the luggage-case;
- Fig. 6: a schematic illustration of an embodiment of the locking element in a locking state;
- Fig. 7: a schematic illustration of an embodiment of the locking element in a de-locking state; and
- Fig. 8: a schematic illustration of an embodiment of the locking element.

The embodiment explained in the following is a preferred embodiment of the invention. Furthermore, the described embodiment can also be supplemented by further features of the invention already described.

In the figures identical reference signs indicate elements that provide the same function.

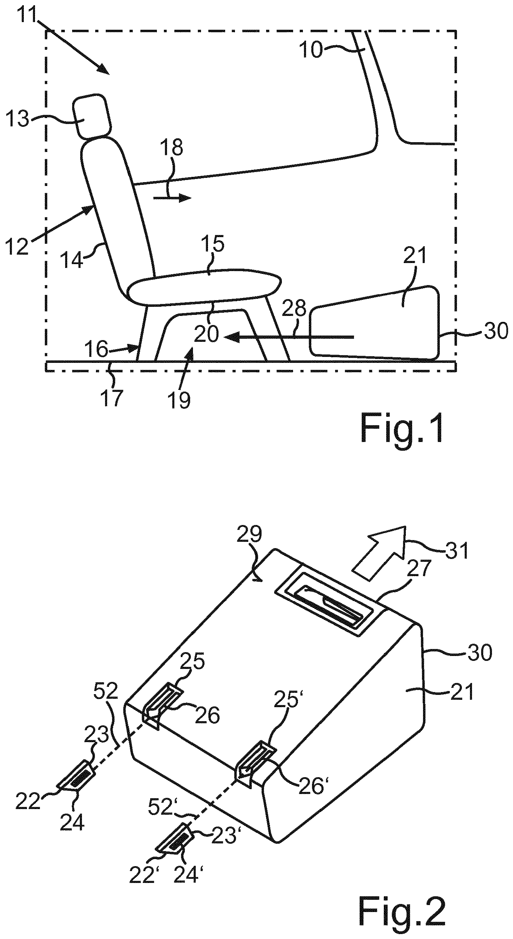

Fig. 1 shows a schematic illustration of a vehicle 10, wherein the vehicle may be a personal vehicle which may be either driven manually or may be a self-driving vehicle. Furthermore, the vehicle 10 may be a semi-autonomous vehicle. In the Fig. 1, a part of an interior cabin 11 of the vehicle 10 is depicted. The vehicle 10 may comprise a vehicle seat 12, on which a user (not shown the figures) can be seated, wherein the user may be a driver of the vehicle 10 or a passenger travelling by the vehicle 10. The vehicle seat 12 may comprise a head rest 13, a back rest 14 and a seated area 15. A seat frame 16 may be designed to support the vehicle seat 12, so that the vehicle seat 12 may be integrated to a vehicle floor 17. The user can be seated on the vehicle seat 12 in a longitudinal direction, that is in the direction of the driving of the vehicle 10 or a predefined direction 18. However, an orientation of the vehicle seat 10 may be adjusted by means of a mechanical mechanism (not shown in the figures) which may be existing between the vehicle seat 12 and the seat frame 16. Furthermore, the vehicle 10 may comprise a luggage-space 19 between a lower side 20 of the vehicle seat 12 and the vehicle floor 17 corresponding to the vehicle seat 12, wherein the shape and size of the luggage-space 19 may be dependent on the form of the seat frame 16. The luggage-space 19 may be designed to receive a luggage-case 21, wherein the luggage-case 21 may be customized according to the shape and size of the luggage-space 19 of the vehicle 10. The luggage-case 21 may be in form of a rucksack or a suitcase with a predefined stiffness, so that the luggage-case 21 may maintain a constant form and shape, wherein the user may store and/or pack different commodities or articles in the luggage-case 21.

The vehicle 10 may comprise at least one primary positioning element 22, 22' in the luggage-space 19, which may be designed to position the luggage-case 21, as shown in Fig. 2. Fig. 2 depicts two primary positioning elements 22, 22' which may be integrated to the lower side 20 of the vehicle seat 12. However, at least one of the lower side 20 of the vehicle seat 12 and the vehicle floor 17 may comprise the at least one primary positioning element 22, 22'. The primary positioning element 22, 22' may comprise a fin 23, 23' respectively. Each of the fin 23, 23' may comprise a respective groove 24, 24'. Furthermore, the luggage-case 21 may comprise at least one secondary positioning element 25, 25', wherein the at least one secondary positioning element 25, 25' is designed to pair with a respective one of the at least one primary positioning element 22, 22'. As shown in Fig. 2 the secondary positioning element 25 is designed to pair with the primary positioning element 22, whereas, the secondary positioning element 25' is designed to pair with the primary positioning element 22'. For example, the secondary positioning element 25, 25' may comprise a crater 26, 26', wherein the fin 23, 23' may be designed to pair with the respective crater 26, 26', as depicted by lines 52, 52'. Hence, a pairing of the primary positioning element 22, 22' with the respective secondary positioning element 25, 25' may be realized. The luggage-case 21 may further comprise a case-handle 27. The user may wish to carry his luggage, while travelling by the vehicle 10. In order to do that, the user may pack his luggage in the luggage-case 21 and put it inside the vehicle 10, ,for example, on the vehicle floor 17. Then the luggage-case 21 may be pushed inside the luggage-space 19, wherein the user may push the luggage-case 21 by holding the case-handle 27 in a direction towards the luggage-space 19, as shown by means of an arrow 28. In this case, the primary positioning element 22, 22' and the secondary positioning element 25, 25' may pair with each other respectively, so that the positioning of the luggage-case 21 in the luggage-space 19 is realized. As shown in Fig. 2, the secondary positioning elements 25, 25' may be integrated on the upper surface of 29 of the luggage-case 21, whereas, the primary positioning elements 22, 22' may be integrated on the lower side 20 of the vehicle seat 12, so that each of the craters 26, 26' of the secondary positioning elements 25, 25' can pair with the fins 23, 23' of the respective primary positioning element 22, 22', as the luggage-case 21 is pushed along a direction, as shown by the arrow 28, inside the luggage-space 19.

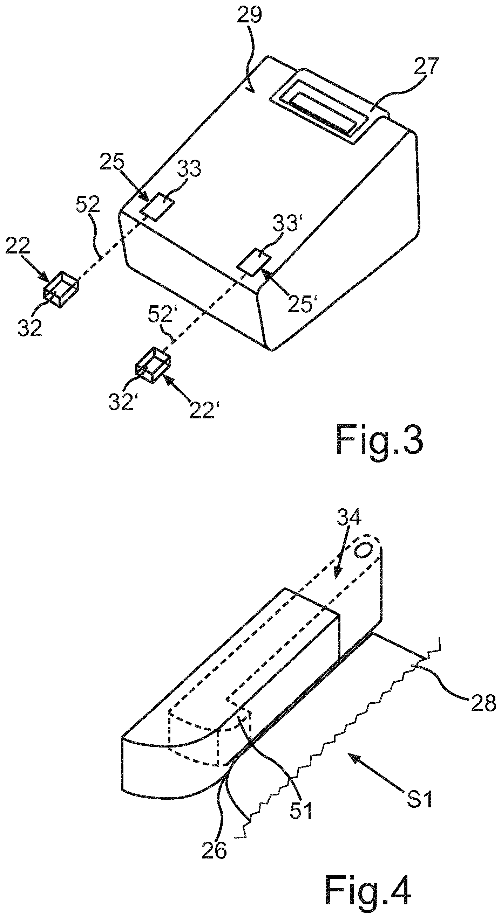

Furthermore, in the fixed state, the case-handle 27 may be positioned at a side 30 of the luggage-case 21 facing the predefined direction 18, that is along the direction of driving of the vehicle 10, wherein the case-handle 27 is designed to assist the pulling out, as shown an the arrow 31, of the luggage-case 21 out of the luggage-space 19. Furthermore, the at least one of the primary positioning element 22, 22' and the at least one secondary positioning element 25, 25' may comprise a positioning magnet 32, 32', 33, 33', which may be designed position the luggage-case 21 or guide the luggage-case 21 for positioning, as shown in Fig. 3. For example, the primary positioning element 22 may comprise the positioning magnet 32, the primary positioning element 22' may comprise the positioning magnet 32', the secondary positioning element 25 may comprise the positioning magnet 33 and the secondary positioning element 25' may comprise the positioning magnet 33'. The positioning of the luggage-case 21, wherein the primary positioning element and the secondary positioning element comprise the positioning magnets 32, 32', 33, 33', may be realized in a similar manner as described in the description of the Fig. 2.

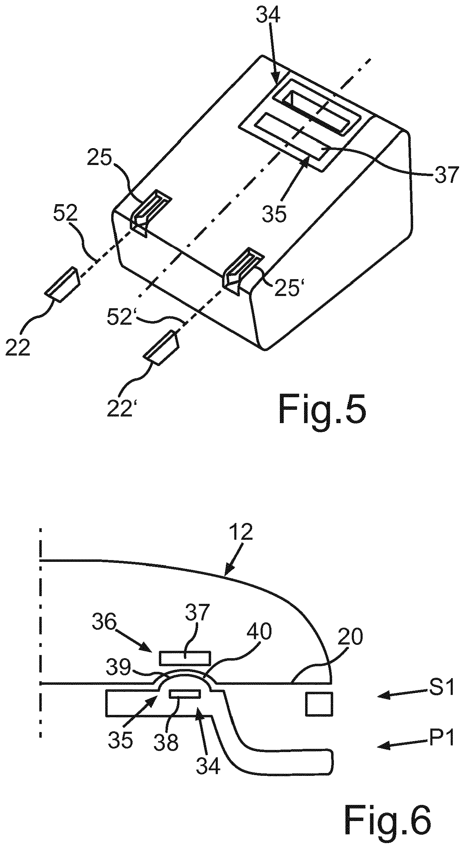

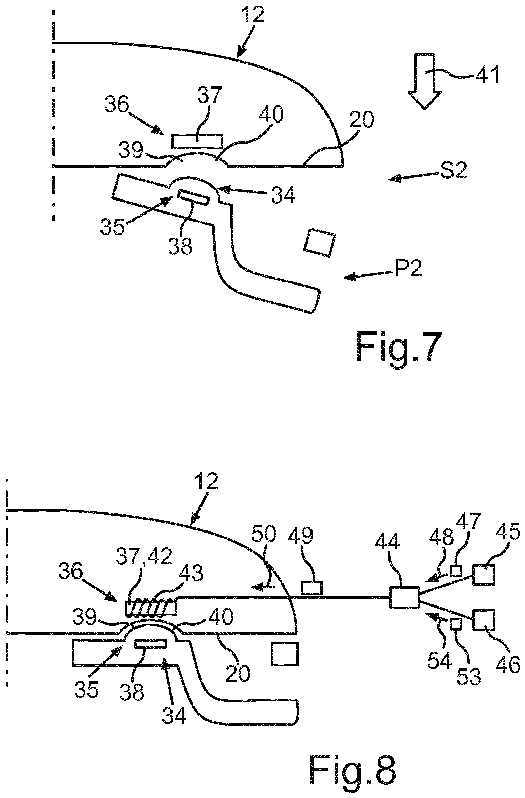

Fig. 4 shows that the luggage-case 21 may comprise at least one locking element 34. The case-handle 27 of the luggage-case 21 may be designed to adjust the at least one locking element 34 between a locking state S1, also shown in Fig. 6, and a de-locking state S2, as shown in Fig. 7. In the locking state S1, the at least one locking element 34 may engage the luggage-case 21 in a fixed state in the luggage-space 19 with respect to the predefined direction 18. In the de-locking state S2, the at least one locking element 34 may disengage the luggage-case 21, in order that the luggage-case 21 is pulled out, as shown by the arrow 31, out of the luggage-space 19 along the predefined direction 18. Fig. 4 shows the positioning of the luggage-case 21 in the luggage-space 19, that is when the primary positioning element 22 comprising the fin 23 with the groove 24 pairs with the crater 26 of the secondary positioning element 25, such that the fin 23 fits into the crater 26. In this case, the case-handle 27 may enable an adjusting of the locking element 34 to the locking state S1. Here, the locking element 34 may comprise a hook element 51 which may designed to engage into the at least one primary positioning element 22, that is into the groove 24 of the fin 23, upon the adjustment of the locking element 34 to the locking state S1. For the sake of better understandability, the primary positioning element 22 has been omitted from the Fig. 4 and only the secondary positioning element 25 and the locking element 34 are depicted. It is thinkable, that the activation of the hook element 51 may be enabled by means of a knop (not shown in the Figure) on the case-handle 27. The activation of the hooking element 51 may be enabled when the locking element 34 is adjusted to the locking state S1 or the deactivation of the hooking element 51 may be enabled when the locking element 34 is adjusted to the de-locking state S2 by means of the knop of the case-handle 27. This may be understood or realized by a person with ordinary skill in the related field of art.

Fig. 5 shows a schematic illustration of an embodiment of the luggage-case 21, wherein the locking element 34 comprises a first locking component 35 and the lower side 20 of the vehicle seat 12 comprises a second locking component 36, as shown in Fig. 6. One of the locking components 35, 36 may comprise a locking magnet 37, 38, that is a first locking magnet 37 and a second locking magnet 38, which may be designed to engage the luggage-case 21 by means of a magnetic force to the other one of the locking components 35, 36. Furthermore, the locking component 35 may comprise a protrusion 39 and the corresponding other locking component 36 may comprise a recession 40, wherein the protrusion 39 may be designed to pair with the recession 40. The case-handle 27 may be adjustable between an engaging position P1, as shown in Fig. 6 and a disengaging position P2, as shown in Fig. 7, in order to adjust the at least one locking element 34 between the locking state S1 and the de-locking state S2. For example, when the case-handle 27 is in the engaging position P1, then the case-handle 27 may be pushed down by means of mechanical force, as detected by the arrow 41, to the disengaging position P2, such that the locking element 34 is adjusted to the de-locking state S2. After adjusting the locking element 34 to the de-locking state S2, the case-handle 27 may be pulled along the direction 31, so that the luggage-case 21 can be pulled out of the luggage-space 19.

Fig. 8 depicts an embodiment of the locking element 34, wherein the first magnet 37 is an induction magnet 42, such that an induction coil 43 loops around the induction magnet 42. The vehicle 10 may comprise an electronic control unit 44 which may be designed to communicate with the other components of the vehicle 10, such as a navigation system 45 and a camera 46 which may be designed to monitor the external environment of the vehicle 10. The electronic control unit 44 may be designed to control the flow of electricity or current through the induction coil 43, in order to control the strength and/or polarity of the induction magnet 42. The strength and/or polarity of the induction magnet 42 can be controlled by means of the electronic control unit 44 a function of a driving situation of the vehicle. The driving situation may be a moving situation of the vehicle or a parked situation, the information regarding the driving situation which may be obtained from the navigation system 45. Furthermore, in case as well as in case of a jerk event, which can be due to the presence of a speed breaker or a sharp turn on the pathway of the vehicle 10, the information can by the camera 46. For example, the navigation system 45 may send a navigation signal 47 along a direction 48 to the electronic control unit 44, such that the electronic control unit 44 may realize that the movement of the vehicle 10, after realizing the movement of the vehicle 10, the electronic control unit 44 may send an electric signal 49, as shown by the arrow 50. Furthermore, the strength or the magnitude of the electricity may be a function of the velocity of the vehicle 10, such that the strength of the induction magnet 42 can be increased in the case of high velocity of the vehicle 10, whereas the strength of the induction magnet 42 may be decreased in the case of lower velocity of the vehicle 10. Since, in the case of the lower velocity the possibility of slipping out of the luggage-case 21 out of the luggage-space 19 is minimal. Furthermore, the camera 46 may send a camera signal 53 to the electronic control unit 44, as shown by an arrow 54, such that the electronic control unit 44 may process the camera signal 53 and estimate a jerk event. In the case of the estimation of the jerk event, the electronic control unit 44 can similarly increase the strength of the induction magnet 42, so that that the locking of the luggage-case 21 is strengthened. Finally, upon the stoppage of the vehicle 10 which can be anticipated by the navigation system 45, the navigation system 45 may send the navigation signal 47 with the information that the vehicle 10 has been stopped to the electronic control unit 44. In this case, the electronic control unit 44 may enable a stoppage of the supply of electric signal 49, such that the magnetism of the induction magnet 42 is deactivated. Hence, the luggage-case 21 can be pulled out of the luggage-space 19, wherein the case-handle 27 may be pushed down along the arrow 41, such that the case-handle 27 is disengaged and the luggage-case 21 can then be pulled out of the luggage-space 19.

Overall, the example shows how the luggage-case 21 can be positioned and locked in the luggage-space 19 of the vehicle 10, as it is provided by the invention.

## Claims

1. Vehicle (10) comprising a vehicle seat (12), a luggage-case (21) and a luggage-space (19) between a lower side (20) of the vehicle seat (12) and a vehicle floor (17), wherein the luggage-space (19) is designed to receive the luggage-case (21),
- the vehicle (10) comprises at least one primary positioning element (22, 22') in the luggage-space (19), which is designed to position the luggage-case (21); and
- the luggage-case (21) comprises at least one secondary positioning element (25, 25') and at least one locking element (34), wherein the at least one secondary positioning element (25) is designed to pair with a respective one of the at least one primary positioning element (22);
**characterized in that**
- the luggage-case (21) comprises a case-handle (27) which is designed to adjust the at least one locking element (34) between a locking state (S1) and a de-locking state (S2), wherein in the locking state (S1), the at least one locking element (34) engages the luggage-case (21) in a fixed state in the luggage-space (19) with respect to a predefined direction (18) and in the de-locking state (S2), the at least one locking element (34) disengages the luggage-case (21), in order that the luggage-case (21) is pulled out of the luggage-space (19) along the predefined direction (18) wherein the locking element (34) is adjusted to the locking state (S1) when a knob provided on the case-handle (27) is pressed, wherein
- the at least one locking element (34) comprises a first locking component (35) and the lower side (20) of the vehicle seat (12) comprises a second locking component (36), wherein one of the locking components (35, 36) comprises a locking magnet (37, 38) which is designed to engage the luggage-case (21) by means of a magnetic force to the other one of the locking components (35, 36), and wherein
- the locking magnet (37, 38) is controlled by an electronic control unit as a function of a driving situation, wherein the driving situation describes a moving situation and/or a static situation of the vehicle (10).

2. Vehicle (10) according to claim 1, wherein one of the locking components (35) comprises a protrusion (39) and the corresponding other locking component (36) comprises a recession (40), wherein the protrusion (39) is designed to pair with the recession (40).

3. Vehicle (10) according to any of the preceding claims, wherein one of the at least one primary positioning element (22, 22') and the at least one secondary positioning element (25, 25') comprises a positioning magnet (32, 32', 33, 33') which is designed to guide the luggage-case (21) for positioning.

4. Vehicle (10) according to any of the preceding claims, wherein the at least one primary positioning element (22, 22') comprises a fin (23, 23') and the at least one secondary positioning element (25, 25') comprises a crater (26, 26'), wherein the fin (23, 23') is designed to pair with the crater (26, 26').

5. Vehicle (10) according to any of the preceding claims, wherein the at least one locking element (34) comprises a hook element (51) which is designed to engage into the at least one primary position element (22, 22') upon an adjustment of the at least one locking element (34) to the locking state (S1).

6. Vehicle (10) according to any of the preceding claims, wherein at least one of the lower side (20) of the vehicle seat (12) and the vehicle floor (17) comprises the at least one primary positioning element (22, 22').

7. Vehicle (10) according to any of the preceding claims, wherein the luggage-case (21) is customized according to the shape and size of the luggage-space (19) of the vehicle (10).

8. Vehicle (10) according to any of the preceding claims, wherein in the fixed state the case-handle (27) is positioned at a side of the luggage-case (30) facing the predefined direction (18), wherein the case-handle (27) is designed to assist the pulling out of the luggage-case (21) out of the luggage-space (19) after an adjustment of the at least one locking element (34) to the de-locking state (S2).

9. Vehicle (10) according to any of the preceding claims, wherein the case-handle (27) is adjustable between an engaging position (P1) and a disengaging position (P2), in order to adjust the at least one locking element (34) between the locking state (S1) and the de-locking state (S2).

## Patentansprüche

1. Fahrzeug (10) umfassend einen Fahrzeugsitz (12), einen Gepäckkoffer (21) und einen Gepäckraum (19) zwischen einer unteren Seite (20) des Fahrzeugsitzes (12) und einem Fahrzeugboden (17), wobei der Gepäckraum (19) ausgestaltet ist, um den Gepäckkoffer (21) aufzunehmen,
- das Fahrzeug (10) zumindest ein primäres Positionierungselement (22, 22') in dem Gepäckraum (19) umfasst, welches ausgestaltet ist, um den Gepäckkoffer (21) zu positionieren; und
- der Gepäckkoffer (21) zumindest ein sekundäres Positionierungselement (25, 25') und zumindest ein Verriegelungselement (34) umfasst, wobei das zumindest eine sekundäre Positionierungselement (25) ausgestaltet ist, um mit einem entsprechenden des zumindest einen primären Positionierungselement (22) gekoppelt zu werden;
**dadurch gekennzeichnet, dass**
- der Gepäckkoffer (21) einen Koffergriff (27) umfasst, welcher ausgestaltet ist, um das zumindest eine Verriegelungselement (34) zwischen einem Verriegelungszustand (S1) und einem Entriegelungszustand (S2) einzustellen, wobei in dem Verriegelungszustand (S1) das zumindest eine Verriegelungselement (34) den Gepäckkoffer (21) in dem Gepäckraum (19) in einem fixierten Zustand in Bezug auf eine vordefinierte Richtung (18) in Eingriff bringt und in dem Entriegelungszustand (S2) das zumindest eine Verriegelungselement (34) den Gepäckkoffer (21) außer Eingriff bringt, damit der Gepäckkoffer (21) entlang der vordefinierten Richtung (18) aus dem Gepäckraum (19) herausgezogen wird, wobei das Verriegelungselement (34) auf den Verriegelungszustand (S1) eingestellt ist, wenn ein auf dem Koffergriff (27) bereitgestellter Knopf gedrückt wird, wobei
- das zumindest eine Verriegelungselement (34) eine erste Verriegelungskomponente (35) umfasst und die untere Seite (20) des Fahrzeugsitzes (12) eine zweite Verriegelungskomponente (36) umfasst, wobei eine der Verriegelungskomponenten (35, 36) einen Verriegelungsmagneten (37, 38) umfasst, welcher ausgestaltet ist, um den Gepäckkoffer (21) mittels einer Magnetkraft mit der anderen der Verriegelungskomponenten (35, 36) in Eingriff zu bringen, und wobei
- der Verriegelungsmagnet (37, 38) durch eine elektronische Steuereinheit als eine Funktion einer Fahrsituation gesteuert wird, wobei die Fahrsituation eine Situation in Bewegung und/oder eine statische Situation des Fahrzeugs (10) beschreibt.

2. Fahrzeug (10) nach Anspruch 1, wobei eine der Verriegelungskomponenten (35) einen Überstand (39) umfasst und die entsprechende andere Verriegelungskomponente (36) eine Vertiefung (40) umfasst, wobei der Überstand (39) ausgestaltet ist, um mit der Vertiefung (40) zu koppeln.

3. Fahrzeug (10) nach einem der vorstehenden Ansprüche, wobei eines des zumindest einen primären Positionierungselements (22, 22') und dem zumindest einen sekundären Positionierungselement (25, 25') einen Positionierungsmagneten (32, 32', 33, 33') umfasst, welcher ausgestaltet ist, um den Gepäckkoffer (21) zum Positionieren zu führen.

4. Fahrzeug (10) nach einem der vorstehenden Ansprüche, wobei das zumindest eine primäre Positionierungselement (22, 22') einen Steg (23, 23') umfasst und das zumindest eine sekundäre Positionierungselement (25, 25') einen Krater (26, 26') umfasst, wobei der Steg (23, 23') ausgestaltet ist, um mit dem Krater (26, 26') zu koppeln.

5. Fahrzeug (10) nach einem der vorstehenden Ansprüche, wobei das zumindest eine Verriegelungselement (34) ein Hakenelement (51) umfasst, welches ausgestaltet ist, um bei einer Einstellung des zumindest einen Verriegelungselements (34) in den Verriegelungszustand (S1) mit dem zumindest einen primären Positionierungselement (22, 22') in Eingriff zu stehen.

6. Fahrzeug (10) nach einem der vorstehenden Ansprüche, wobei zumindest einer der unteren Seite (20) des Fahrzeugsitzes (12) und des Fahrzeugbodens (17) das zumindest eine primäre Positionierungselement (22, 22') umfasst.

7. Fahrzeug (10) nach einem der vorstehenden Ansprüche, wobei der Gepäckkoffer (21) gemäß der Form und Größe des Gepäckraums (19) des Fahrzeugs (10) angepasst ist.

8. Fahrzeug (10) nach einem der vorstehenden Ansprüche, wobei in dem fixierten Zustand der Koffergriff (27) an einer Seite des Gepäckkoffers (30) positioniert ist, welche der vordefinierten Richtung (18) zugewandt, wobei der Koffergriff (27) ausgestaltet ist, um das Herausziehen des Gepäckkoffers (21) aus dem Gepäckraum (19) nach einer Einstellung des zumindest einen Verriegelungselements (34) auf den Entriegelungszustand (S2) zu unterstützen.

9. Fahrzeug (10) nach einem der vorstehenden Ansprüche, wobei der Koffergriff (27) zwischen einer Position in Eingriff (P1) und einer Position außer Eingriff (P2) einstellbar ist, um das zumindest eine Verriegelungselement (34) zwischen dem Verriegelungszustand (S1) und dem Entriegelungszustand (S2) einzustellen.

## Revendications

1. Véhicule (10) comprenant un siège de véhicule (12), une coque à bagages (21) et un espace à bagages (19) entre un côté inférieur (20) du siège de véhicule (12) et un plancher de véhicule (17), dans lequel l'espace à bagages (19) est conçu pour recevoir la coque à bagages (21),
- le véhicule (10) comprend au moins un élément de positionnement principal (22, 22') dans l'espace à bagages (19) qui est conçu pour positionner la coque à bagages(21) ; et
- la coque à bagages (21) comprend au moins un élément de positionnement secondaire (25, 25') et au moins un élément de verrouillage (34), dans lequel l'au moins un élément de positionnement secondaire (25) est conçu pour s'apparier avec un respectif de l'au moins un élément de positionnement principal (22) ;
**caractérisé en ce que**
- la coque à bagages (21) comprend une poignée de coque (27) qui est conçue pour ajuster l'au moins un élément de verrouillage (34) entre un état de verrouillage (S1) et un état de déverrouillage (S2), dans lequel dans l'état de verrouillage (S1), l'au moins un élément de verrouillage (34) met en prise la coque à bagages (21) dans un état fixé dans l'espace à bagages (19) par rapport à une direction prédéfinie (18) et dans l'état de déverrouillage (S2), l'au moins un élément de verrouillage (34) met hors prise la coque à bagages (21) afin que la coque à bagages (21) soit tirée hors de l'espace à bagages (19) le long de la direction prédéfinie (18), dans lequel l'élément de verrouillage (34) est ajusté à l'état de verrouillage (S1) lorsqu'un bouton prévu sur la poignée de coque (27) est pressé, dans lequel
- l'au moins un élément de verrouillage (34) comprend un premier composant de verrouillage (35) et le côté inférieur (20) du siège de véhicule (12) comprend un second composant de verrouillage (36), dans lequel un des composants de verrouillage (35, 36) comprend un aimant de verrouillage (37, 38) qui est conçu pour mettre en prise la coque à bagages (21) au moyen d'une force magnétique à l'autre des composants de verrouillage (35, 36), et dans lequel
- l'aimant de verrouillage (37, 38) est commandé par une unité de commande électronique en fonction d'une situation de conduite, dans lequel la situation de conduite décrit une situation mobile et/ou une situation statique du véhicule (10).

2. Véhicule (10) selon la revendication 1, dans lequel un des composants de verrouillage (35) comprend une saillie (39) et l'autre composant de verrouillage correspondant (36) comprend un évidement (40), dans lequel la saillie (39) est conçue pour s'apparier avec l'évidement (40).

3. Véhicule (10) selon l'une quelconque des revendications précédentes, dans lequel un de l'au moins un élément de positionnement principal (22, 22') et l'au moins un élément de positionnement secondaire (25, 25') comprend un aimant de positionnement (32, 32', 33, 33') qui est conçu pour guider la coque à bagages (21) pour le positionnement.

4. Véhicule (10) selon l'une quelconque des revendications précédentes, dans lequel l'au moins un élément de positionnement principal (22, 22') comprend une ailette (23, 23') et l'au moins un élément de positionnement secondaire (25, 25') comprend un creux (26, 26'), dans lequel l'ailette (23, 23') est conçue pour s'apparier avec le creux (26, 26').

5. Véhicule (10) selon l'une quelconque des revendications précédentes, dans lequel l'au moins un élément de verrouillage (34) comprend un élément de crochet (51) qui est conçu pour venir en prise dans l'au moins un élément de positionnement principal (22, 22') suite à un ajustement de l'au moins un élément de verrouillage (34) à l'état de verrouillage (S1).

6. Véhicule (10) selon l'une quelconque des revendications précédentes, dans lequel au moins un du côté inférieur (20) du siège de véhicule (12) et du plancher de véhicule (17) comprend l'au moins un élément de positionnement principal (22, 22').

7. Véhicule (10) selon l'une quelconque des revendications précédentes, dans lequel la coque à bagages (21) est adaptée selon la forme et la taille de l'espace à bagages (19) du véhicule (10).

8. Véhicule (10) selon l'une quelconque des revendications précédentes, dans lequel dans l'état fixé la poignée de coque (27) est positionnée au niveau d'un côté de la coque à bagages (30) tourné vers la direction prédéfinie (18), dans lequel la poignée de coque (27) est conçue pour aider à l'extraction de la coque à bagages (21) hors de l'espace à bagages (19) après un ajustement de l'au moins un élément de verrouillage (34) à l'état de déverrouillage (S2).

9. Véhicule (10) selon l'une quelconque des revendications précédentes, dans lequel la poignée de coque (27) est ajustable entre une position de mise en prise (P1) et une position de mise hors prise (P2) afin d'ajuster l'au moins un élément de verrouillage (34) entre l'état de verrouillage (S1) et l'état de déverrouillage (S2).
